# EUROPEAN PATENT APPLICATION

(11) **EP 0 990 675 A1**
(43) Date of publication of application: **05.04.2000**
(21) Application number: 99119015.8
(22) Date of filing: 28.09.1999
(51) Int. Cl.: C08K 3/36, C08L 23/16, E04D 5/06, C08L 91/00

(54) **Non-black, mineral-filled roof accessories**

(30) Priority: 02.10.1998 US 165833
(71) Applicant: BRIDGESTONE/FIRESTONE, INC., Akron, Ohio 44317 (US)
(72) Inventor: Davies, James A., Indianapolis, Indiana 46280 (US); Burkett, James E., Indianapolis, Indiana 46236 (US); Rose, Jerry C., Fishers, Indiana 46038 (US)
(74) Representative: Albrecht, Thomas, Dr.

(57) **Abstract**

Non-black, mineral-filled EPDM roof accesory compositions may be prepared from a composition of matter containing at least one EPDM terpolymer and, per 100 parts of the EPDM terpolymer, from about 25 to about 275 pbw of at least one non-black mineral filler; from about 20 to about 130 pbw of a non-staining processing oil; and from about 1.5 to about 10 pbw of a sulfur cure package having at least one organic vulcanizing accelerator. The non-black, mineral-filled polymeric roof accessory material can be provided in either a cured state, suitable for use as perimeter strips, pipe boot flashing and walkway pads, or in an uncured or partially cured state, suitable for use as batten covers, flashing (formflash) and corner flashing.

## Description

### TECHNICAL FIELD

This invention relates generally to roofing compositions used in the construction industry to cover intricately or irregularly-shaped roofs, roofing structures, roof penetrations and the like. More particularly, the present invention relates to cured and uncured, non-black, mineral-filled, roof accessory compositions having a cure rate and protective properties substantially equivalent to the protective properties of conventional carbon black-reinforced roofing accessory material. The non-black, mineral-filled roofing compositions of the present invention provide an exposed surface which is non-staining when exposed to sunlight for extended periods of time and exhibits excellent sunlight reflectance, long-term weathering, ozone aging resistance, heat aging performance and low water absorption.

### BACKGROUND INFORMATION

Polymeric sheeting material has been used for several years in the roofing and construction industry for covering industrial and commercial flat roofs of new buildings and for refurbishing the roofs of older buildings. Typically, such sheeting material is generally applied to a roof surface in the form of a single-ply roof sheeting material which is in a vulcanized or cured state.

Various rubber compositions have been used as roofing membranes over the years, including neoprene, butyl rubber, ethylene-propylene-diene terpolymers (EPDM), ethylene-propylene rubber, various ethylene-alkene copolymers, and similar olefinic-type polymers and blends thereof. Because of its outstanding weathering resistance and flexibility, cured EPDM-based roof sheeting has gained particular acceptance in the building and construction industries as a suitable material for roofing purposes. EPDM is also advantageous in that it can be mixed with other ingredients such as fillers, processing oils and the like to provide a suitable rubber composition. The rubber composition is normally prepared by vulcanization in the presence of sulfur or sulfur containing compounds, such as mercaptans. Inclusion of radiation cross-linking promoters in an EPDM sheeting composition can allow the same to be cured by ionizing radiation.

Such EPDM and other polyolefinic roof sheeting materials traditionally have been reinforced with carbon black and are black in color. The black color is generally provided because of the use of carbon black, coal filler and related petroleum-derived materials, or other similarly dark-colored fillers in the composition from which the sheeting material is prepared. While carbon black has been found to be particularly useful as reinforcing filler in these membrane compositions, there are certain instances where a black membrane may be undesirable. Accordingly, various attempts have been made to provide non-black and, more specifically, mineral-filled, white roof sheeting compositions.

White rubber membrane compositions typically have been produced from a variety of the polymeric rubbers listed hereinabove and non-black mineral fillers such as soft and hard clays, chemically modified clays, calcium carbonate, silicas, talc, mica or titanium dioxide, in combination with non-staining process oils.

Although traditional EPDM and other polyolefinic roof sheeting materials have been useful for covering flat or moderately-shaped roof and roofing structures, these materials lack the requisite flexibility and formability to successfully and permanently conform to, cover, and protect intricately or irregularly-shaped roofs, roofing structures, roof penetrations, and the like. Gaps readily develop around the contours between the sheeting sections of the roof and those other portions of the roof in which traditional EPDM or other polyolefinic materials are used as flashing materials.

Accordingly, it is believed desirable to develop white or off-white, mineral-filled roof accessory compositions having improved properties compared to the conventional carbon black-filled roof flashing materials. For example, roofing materials desirably include an exposed surface which is non-staining when exposed to sunlight for extended periods of time and exhibit improved sunlight reflectance and improved burn resistivity compared to a conventional carbon black-reinforced roof flashing material while maintaining similar cure rates, stress-strain properties, die C tear characteristics, compound viscosities, Shore A hardnesses and weathering properties.

The resulting compositions of this invention are seen as being useful to the manufacture of roofing materials for covering intricately or irregularly-shaped roofs, roofing structures, roof penetrations, and the like where aesthetics, sunlight reflectance, long-term weathering and ozone resistance, low water absorption and good heat aging properties are desirable characteristics of roofing materials.

### SUMMARY OF THE INVENTION

It is therefore, an object of the present invention to provide mineral-filled, white-colored (non-black) polymeric roof accessory compositions suitable for use in the construction industry on intricately or irregularly-shaped building roofs, rooting structures, roof penetrations, and the like.

It is a further object of the present invention to provide cured, mineral-filled, white-colored polymeric roofing compositions suitable for use in the construction industry on intricately or irregularly-shaped building roofs, roofing structures, including roof penetrations, and the like, in which the cured mineral-filled, white-colored polymeric roofing compositions are useful as perimeter strips, pipe boot flashing and walkway pads.

It is a further object of the present invention to provide an uncured mineral-filled, white-colored polymeric roof flashing material suitable for use in the construction industry on intricately or irregularly-shaped building roofs, roofing structures, including roof penetrations, and the like, in which the uncured or partially cured mineral-filled, white-colored polymeric roof flashing material are useful as batten covers, flashing (formflash), and corner flashing.

It is a further object of the present invention to provide a mineral-filled, white-colored polymeric roof accessory composition, as above, which employs EPDM terpolymers as the rubber component in the roofing composition.

It is a further object of the present invention to provide a mineral-filled, white-colored polymeric roof flashing material, as above, that employs a blend of non-black mineral fillers which improves certain physical properties in the roofing composition such as stress-strain and die C tear properties.

It is a further object of the present invention to provide a mineral-filled, white-colored polymeric roof accessory composition, as above, which imparts improved burn resistivity as compared to traditional carbon black-reinforced roof flashing material.

It is a further object of the present invention to provide a mineral-filled, white-colored polymeric roof flashing material, as above, which is compatible with seam tape, primers, and various adhesive systems.

It is a further object of the present invention to provide an uncured mineral-filled, white-colored polymeric roof accessory composition, as above, which are flexible and extensible but, once formed, are not springy and do not retract or return to their original shape or form.

It is a further object of the present invention to provide a mineral-filled, white-colored polymeric roof accessory composition, as above, which has high sunlight reflectance and good resistance to staining and discoloration.

It is a further object of the present invention to provide an uncured mineral-filled, white-colored polymeric roof accessory composition, as above, which has excellent long-term weathering and ozone aging resistance, good heat aging performance, and low water absorption.

It is a further object of the present invention to provide an uncured mineral-filled, white-colored polymeric roof accessory composition, as above, which has acceptable long term storage stability or shelf-life when exposed to warehouse temperatures ranging from about room temperature to about 135°F (57°(C).

It is a further object of the present invention to provide a method for covering intricately or irregularly-shaped roofs, roofing structures, roof penetrations, and the like.

In general the present invention provides a cured, non-black, mineral-filled roof accessory material selected from the group consisting of perimeter strips, pipe boot flashing and walkway pads prepared from a composition comprising least one ethylene-propylene-diene terpolymer having at least 4 weight percent unsaturation and, per 100 parts of EPDM terpolymer, from about 25 to about 275 parts by weight (pbw) of at least one mineral filler; from about 20 to about 130 pbw of a non-staining processing oil; and from about 1.5 to about 10 pbw of a sulfur cure package having at least one organic vulcanizing accelerator. The cure package allows the roof accessory material to cure at about the same rate as a compatible black roofing material at 160°C. Also described is a method for covering an intricately or irregularly-shaped root roofing structure, or roof penetration, comprising applying to the intricately or irregularly-shaped roof, roofing structure, or roof penetration, the just-described cured, non-black, mineral-filled roof accessory material.

The invention also provides a rooftop curable, non-black, mineral-filled roof accessory material selected from the group consisting of batten covers, corner flashing and formflash prepared from an uncured or partially cured composition comprising at least one ethylene-propylene-diene terpolymer and, per 100 parts of EPDM terpolymer, from about 25 to about 275 pbw at least one mineral filler; from about 25 to about 130 pbw of a non-staining processing oil; and from 1.5 to about 10 pbw of a sulfur cure package having at least one organic vulcanizing accelerator. A method for covering an intricately or irregularly-shaped roof, roofing structure, or roof penetration in which the just-described rooftop curable roof accessory material is applied to the intricately or irregularly-shaped roof, etc., also is described.

### DETAILED DESCRIPTION OF PREFERRED EMBODIMENTS

As noted hereinabove, the present invention is directed toward non-black, mineral-filled, polymeric roofing compositions which are white or off-white in color and cure at about the same rate at a particular temperature as a conventional carbon black-reinforced roof sheeting material. The white-colored polymeric roofing compositions of the present invention includes one or more EPDM terpolymers.

The term EPDM is used in the sense of its definition as found in ASTM-D-1418-94 and is intended to mean a terpolymer of ethylene, propylene and a diene monomer with the residual unsaturation portion of the diene in the side chain. Methods for preparing such EPDM terpolymers are well known in the art. One illustrative method can be found in U.S. Pat. No. 3,280,082. Other illustrative methods can be found, for example, in *Rubber and Chemistry & Technology*, Vol. 45, No. 1, Division of Rubber Chemistry (March 1992); Morton, *Rubber Technology*, 2d ed., Chapter 9, Van Nostrand Reinhold Company, New York (1973); *Polymer Chemistry of Synthetic Elastomers, Part II, High Polymer Series,* Vol. 23, Chapter 7, John Wiley & Sons, Inc. New York (1969); *Encyclopedia of Polymer Science and Technology,* Vol. 6, pp. 367-68, Interface Publishers, a division of John Wiley & Sons, Inc., New York (1967); *Encyclopedia of Polymer Science and Technology,* Vol. 5, p. 494, Interface Publishers, a division of John Wiley & Sons, Inc., New York (1966); and *Synthetic Rubber Manual*, 8th ed., International Institute of Synthetic Rubber Producers, Inc. (1980).

Preferably, the cured, non-black, mineral-filled EPDM based roof accessory compositions of the present invention has from about 57 to about 70 weight percent ethylene and from about 3.5 to about 5.0 weight percent diene with the balance of the polymer being propylene or some other similar olefin-type polymer. Preferably, the EPDM terpolymer has at least 4 weight percent unsaturation, and more preferably, between about 4 to about 4.6 weight percent unsaturation.

Preferably, the uncured, non-black, mineral-filled EPDM based roof accessory compositions of the present invention has from about 57 to about 68 weight percent ethylene and from about 3.5 to about 4.8 weight percent of the diene with the balance of the polymer being propylene or some other similar olefin-type polymer. More preferably, the EPDM terpolymer has between about 3.8 to about 4.5 weight percent diene (unsaturation).

The diene monomer utilized in forming the EPDM terpolymer is preferably a non-conjugated diene. Illustrative examples of non-conjugated dienes which may be employed are dicyclopentadiene; alkyldicyclopentadiene; 1,4-pentadiene; 1,4-hexadiene; 1,5-hexadiene; 1,4-heptadiene; 2-methyl-1,5-hexadiene; cyclooctadiene; 1,4-octadiene; 1,7-octadiene; 5-ethylidene-2-norbornene; 5-n-propylidene-2-norbornene; 5-(2-methyl-2-butenyl)-2-norbornene and the like.

Typical EPDM terpolymers suitable for use in the present invention is Royalene™ 501, an EPDM terpolymer having a Mooney Viscosity (ML/1+4 at 125°C) of about 31, an ethylene content of about 57 weight percent and about 4.5 weight percent unsaturation (5-ethylidene-2-norbornene); Royalene™ 502, an EPDM terpolymer having a Mooney Viscosity (ML/1+4) at 125°C) of about 60, an ethylene content of about 63 weight percent and about 4.5 weight percent unsaturation (5-ethylidene-2-norbornene); Royalene™ 512, an EPDM terpolymer having a Mooney Viscosity (ML/1+4 at 125°C) of about 58, an ethylene content of about 68 weight percent and about 4.2 weight percent unsaturation (5-ethylidene-2-norbornene); Vistalon™ 3708 an EPDM terpolymer having a Mooney Viscosity (ML/1+4 at 125°C) of about 52, an ethylene content of about 69 weight percent and about 3.2 weight percent of unsaturation (5-ethylidene-2-norbornene); and 960064-E (Goldsmith and Eggleton), an EPDM terpolymer having a Mooney Viscosity (ML/1+4 at 125°C) of about 47, an ethylene content of about 66 weight percent and about 5.0 weight percent of unsaturation (5-ethylidene-2-norbornene).

As noted hereinabove, more than one EPDM may be employed. Where more than one EPDM is employed, it is preferred that the EPDM rubbers be blended to form the rubber composition. A typical EPDM polymer blend may include such EPDMs as are available from the Uniroyal Chemical Co. A preferred EPDM terpolymer blend comprises Royalene™ 502, and Royalene™ 512. Blend ratios between 25:75 and 75:25 are preferred, and between 35:65 and 65:35 being most preferred.

In another embodiment, the rubber component may comprise a single EPDM terpolymer, such as Vistalon™ 3708 or Royalene™ X-4136. Royalene™ X-4136 has a Mooney Viscoity (ML/1+4 at 125°C) of about 47, an ethylene content of about 69.5 weight percent and about 2.8 weight percent of unsaturation.

The non-black, mineral-filled polymeric roofing compositions comprise 100 pbw of at least one EPDM, to which are added non-black mineral fillers as replacement for traditionally used black fillers, as well as processing materials and, optionally, other components, all of which are discussed hereinbelow.

With respect first to the non-black mineral fillers, several such fillers have been employed in the past, including those selected from the group consisting of hard clays, soft clays, chemically modified clays, mica, talc, alumina trihydrates, calcium carbonate, titanium dioxide, silica, and certain mixtures thereof. In no instances, however, have these fillers completely replaced the black fillers, i.e., carbon black and other petroleum-derived materials, for use in roofing components other than roofing membranes.

In the present invention and, more particularly, the preferred embodiment, several non-black mineral fillers are employed, and a combination of these non-black mineral fillers provides the preferred roofing material of the present invention. Specifically, the non-black mineral fillers of the present invention preferably include a combination of a chemically modified clay or silicate and a reinforcing silica.

Chemically modified reinforcing clays are known in the art. Crosslinking ability is imparted to the clay by modifying the surface of the individual particles with a polyfunctional silane coupling agent. Chemically modified clays are used in the amount of from about 25 to about 275 parts per 100 parts rubber (phr), preferably in an amount from about 50 to 175 phr. The preferred range of chemically modified clays is about equal to the amount of carbon black (50 to 150 phr) normally used in preparing sulfur cured EPDM roof sheeting. Normally, the specific gravity of most clays is about 2.60 at 25°C. Preferred chemically modified clays include Nucap™ 190, 200, and 290, Nulok™ 321 and 390, and Polyfil™ 368 clays (J.M. Huber Co.) as well as Mercap™ 100 and 200, Amlok™ 321, and Starfil PH clays (Kentucky-Tennessee Clay Co.). Most preferred of these are Mercap™ 100 and Nucap™ 190 clays.

As an alternative to the chemically modified clay, a silicate may have utility in the present invention. Synthetic amorphous calcium silicates are preferred and are commercially available from the J.M. Huber Co. as Hubersorb™ 600, which is characterized as having an average particle size of 3.2 µm (by the Coulter counter method), oil absorption of 450 mL/100 g of calcium silicate, a BET (Brunaver-Emmet-Teller nitrogen - adsorption procedure) surface area of 300 m²/g and a pH (5% solution) of about 10.

Other silicates which may be used to practice the present invention include precipitated, amorphous sodium aluminosilicates available from the J.M. Huber Co. as Zeolex™ 23 and Zeolex™ 80. The former has a BET surface area of about 75 m²/g, a refractive index at 20°C of about 1.51, and a pH of about 10.2 (determined by slurrying 20 g silicate with 80 g distilled water having a pH of about 7). The latter has a BET surface area of about 115 m²/g, a refractive index at 20°C of about 1.55, and a pH of about 7. The average particle size, density, physical form, and oil absorption properties of the two are similar.

Reinforcing silicas are also used as non-black fillers, preferably in conjunction with one or more of the chemically modified clays noted hereinabove. Silica (silicon dioxide) utilizes the element silicon and combines it in a very stable way with two oxygen atoms. Silica is found in both crystalline and amorphous (non-crystalline) forms. The latter involves silicon and oxygen atoms arranged in an irregular form. This form of silica is classified as amorphous (non-crystalline), because there is no detectable crystalline silica as determined by X-ray diffraction. Amorphous silicas are preferred in this invention. These silicas can be employed in the amount of about 10 to about 110 phr, preferably in an amount from about 20 to 50 phr. The useful upper range is limited by the high viscosity imparted by fillers of this type.

The most preferred silica is a white, fine particle, hydrated amorphous silica having a specific gravity of about 2.60 mg/m³. It is commercially available from PPG Industries, Inc., in a low dust granular form under the tradename HiSil™ 243 LD, which has a BET surface area of 150 m²/g, an oil (DBP) absorption of about 190 mL/100g. and a particle size of about 19 nm as determined by the Coulter counter method. This form of silica is classified as amorphous because there is no detectable crystallinity as determined by X-ray diffraction.

In some instances, a number of other types of clays besides chemically modified clays may be useful. Three other basic types of clays which are normally used as reinforcing fillers for rubber elastomers include airfloated, water washed, and calcined clays.

Airfloated clays are the least expensive and most widely used. They are divided into two general groups, bard and soft, and offer a wide range of reinforcement and loading possibilities. Hard kaolin clays may be used in the amount of about 20 to about 250 phr, preferably in an amount from about 35 to 150 phr. The preferred range of hard kaolin clays (35 to 140 phr) is also about equal to the amount of carbon black normally used in preparing sulfur cured EPDM roofing materials. Preferred airfloated hard clays include Suprex™, Barden R™, and LGB-1™ clays (Kentucky-Tennessee Clay Co.). Airfloated soft clays are used in the amount of about 20 to about 250 phr, preferably in an amount from about 35 to 150 phr. The preferred range of soft clays generally is about equal to the amount of carbon black normally used in preparing sulfur cured EPDM roof sheeting. Preferred airfloated soft clays include Paragon™ and Alumex™ clays (Kentucky-Tennessee Clay Co.) and Hi-White R™ clay (Evans Clay).

Water-washed clays normally are considered as semi-reinforcing fillers. This particular class of clays is more closely controlled for particle size by the water-fractionation process. The preferred ranges of water washed clays are very similar to the preferred amounts of airfloated soft clays mentioned hereinabove. Some preferred water washed clays Polyfil™ DL, F, FB, HG-90, K and XB (J.M. Huber Co.)

A third type of clay is calcined clay. Clays normally contain approximately 14 percent water of hydration, most of which can be removed by calcination. The amount of water removed determines the degree of calcination. Preferred ranges of calcined clays are very similar to the preferred amounts of airfloated hard clays mentioned hereinabove. Some preferred calcined clays include Polyfil™ 40, 70, and 80 clays (J.M Huber Co.).

Finely ground calcium carbonate can be employed in the amount of about 20 to about 200 phr, preferably in an amount of from about 35 to about 90 phr. Calcium carbonate is commercially available from a number of suppliers including Harwick Chemical, J.M. Huber Co., Georgia Marble, Genstar Stone Products, and Omya, Inc.

Titanium dioxide can be employed in the amount of about 5 to about 80 phr, preferably in an amount of from about 20 to about 50 phr. Both the rutile and anatase form of titanium dioxide may be used, although the rutile form is preferred and includes such products as TiPure™ R-960 TiO₂ (DuPont de Nemours Co.; Wilmington, Delaware).

With respect to the processing oil, it is included to improve the processing behavior of the composition (i.e., to reduce mixing time, enhance pigment incorporation, and increase the rate of sheet forming). The processing oil is included in an amount ranging from about 25 to about 130 phr, preferably in an amount ranging from about 40 to about 100 phr. A preferred non-staining processing oil is a paraffinic oil, e.g. Paraflex™ HT-100 (Petro-Canada; Mississauga, Ontario). Other desirable processing oils that are essentially odorless and colorless and may have utility in this invention include Tufflo™ 6056 (Lyondell Petrochemical Co.; Houston, Texas), Sunpar™ 150 and LW150 oils (Sun Oil Co.), and Pennzultra™ 1199 oil (Pennzoil). These petroleum-derived processing oils are essentially free of aromaticity as well as sulfur (<0.05 weight percent) and have refractive indices ranging between about 1.4745 to 1.4774. Other petroleum derived oils, including naphthenic oils, that offer superior color and UV stability may be used.

Some process oils can act as softeners or extenders for the rubber roof accessory compositions. These softeners or extenders are odorless, colorless, low sulfur, non-staining process oils and should not migrate to the surface of the cured rubber membrane or rubber roof accessory (i.e., pipe boot flashing, batten cover, walkway pad, flashing, perimeter strips, and the like).

Regarding the cure package, sulfur or sulfur vulcanizing agents or mixtures thereof are preferred and typically are employed in the composition in amounts ranging from about 1.5 to about 10 phr by weight, although from about 2.0 to about 6.5 phr is more preferred. In effect, curing of the EPDM or like rubbers can be effected by any of the well known curing systems, including the sulfur and sulfur-donor cure systems noted hereinabove, as well as peroxide cure systems and quinone-type cure systems.

In a sulfur cure system sulfur preferably is employed in amounts of about 0.25 to about 2.0 phr, with about 1.0 phr being particularly preferred. In addition, the cure package may provide one or more accelerators or vulcanizing agents including, but not necessarily limited to, dithiocarbamate accelerators, including the metal dialkyldithiocarbamates such as, for example, zinc dibutyldithiocarbamate (ZDBDC), zinc diethyldithiocarbamate, zinc dimethyldithiocarbamate, and ferric dimethyldithiocarbamate and thiazole accelerators including 2-mercaptobeuzothiazole, the benzothiazole disulfides such as, for example, mercaptobenzothiazole disulfide (MBTS), and the benzothiazole sulfenamides such as, for example, n-cyclohexyl-2-benzothiazole sulfenamide. Other useful accelerators that can be employed with the EPDM terpolymers include 2,2'-dibenzothiazyl disulfide, tetramethylthiuram disulfide, 4,4'-dithiomorpholine, dipentamethylene thiuram hexasulfide (DPTH), tetramethylthiuram monosulfide, tetramethylthiuram disulfide (TMTDS), N-tert-butyl-2-benzothiazole sulfenamide (TBBS), zinc o,o-dibutylphosphorodithioate, and the like. Specific vulcanization systems may further depend upon how the composition is to be used, e.g., as a roofing membrane or as a rooftop curable flashing composition. Roofing membranes can be cured in a hot air or steam autoclave not exceeding a temperature of about 320°F (160°C) and a vulcanizer pressure of about 100 psi (689 kPa). Flashing and other related uncured or partially cured roof accessories (i.e., corner flashing, batten covers, and the like), are installed on the roof of a building and allowed to rooftop cure.

The foregoing accelerators are not exclusive, and that other vulcanizing agents known in the art to be effective in the curing of EPDM may also be utilized. For a list of additional vulcanizing agents, see *The Vanderbilt Rubber Handbook,* RT Vanderbilt Co., Norwalk, Connecticut (1979).

In a preferred embodiment, the sulfur cure package includes sulfur, MBTS, ZDBDC, and DPTH. In another preferred embodiment, the sulfur cure package includes sulfur, ZDBDC, sulfads (i.e., DPTH), and TBBS.

Accelerators generally require a metal oxide for cure activation in most types of rubbers. Zinc oxide almost always is the metal oxide of choice because of its effectiveness and lack of toxicity. The amount of zinc oxide may vary, but about 1 to about 10 parts in the formulation have been found to be effective. Also, to initiate the vulcanization process, a small amount (generally about 1 to 2 pbw) of stearic acid is present in the non-black EPDM roof accessory composition. Using heat, both zinc oxide and stearic acid act as cure activators in the presence of sulfur, one or more accelerators and unsaturated polymer, e.g., EPDM, to help promote the formation of sulfur crosslinks during the vulcanization process. Some of the initial chemical reactions that take place during the early stages of the vulcanization process include reacting zinc oxide with stearic acid to form salts of even greater vulcanization activity. Zinc oxide itself acts as a cure activator or vulcanization promoter, speeding the rate of reaction of elemental sulfur with the unsaturation in the diene portion of the ethylene propylene rubber. In addition to its use as a curing component, the sulfur component of the present invention may also be used in conjunction with zinc oxide to improve the heat aging resistance of the EPDM roof accessory composition.

Optional ingredients for the compositions from which roofing accessories of the present invention are made include, for example, other elastomers (e.g., butyl elastomer, neutralized sulfonated EPDM, neutralized sulfonated butyl) in place of minor amounts of the EPDM, secondary inorganic fillers (e.g., talc, mica, clay, silicates, whiting) with total secondary filler content usually ranging from about 15 to about 95 phr, and conventional amounts of other conventional additives, such as magnesium oxide, antioxidants, processing aids, release agents, antiozonants, flame retardants, and the like.

Compounding ingredients can be admixed, utilizing an internal mixer (such as a Banbury mixer), an extruder, and/or a two-roll mill, or other mixers suitable for forming viscous, relatively uniform admixtures. When utilizing a type B Banbury internal mixer, in a preferred mode, the dry or powdery materials such as the mineral fillers as well as zinc oxide, stearic acid and the antioxidant of the present invention are added first, followed by the liquid non-staining process oil, and finally the EPDM. The resultant mixture forms a rubber masterbatch to which the cure package can be added. The cure package typically includes sulfur and one or more organic curing accelerators.

Several cured, white-colored, mineral-filled EPDM roof accessory compositions, suitable for use as pipe boot flashing, perimeter strips and walkway pads, and uncured, white-colored, mineral-filled EPDM roofing compositions, suitable for use as batten covers, flashing (formflash) and corner flashing were prepared and subjected to a variety of tests to obtain data as to the physical properties of the resultant roofing materials prepared.

Preferred EPDM polymers include Royalene™ 501, 502, 512, and X-4136 as well as Vistalon™ 3708, MD-2727, and 960064-E (Goldsmith and Eggleton), and blends thereof. A more detailed characterization of these EPDM terpolymers is provided hereinabove.

The non-black, mineral-filled EPDM roofing compositions prepared according to the present invention also include about 50 phr of a chemically modified clay, i.e., Mercap™ 100, NuCap™ 190, and the like. As noted hereinabove, this clay is a chemically modified or treated clay wherein the surface of the individual clay particles are modified with a polyfunctional mercaptosilane coupling agent to impart crosslinking between the surface of the clay particle and the rubber matrix.

In a preferred embodiment, the non-black, mineral filled EPDM roof accessory compositions, suitable for use as walkway pads, are prepared according to the present invention also included about 50 phr or more of a hard clay, i.e., Par™ clay, Par RG™ clay, Suprex™ clay, Snobrite™ clay, and the like. Both chemically modified clays and untreated air-floated clays either individually or in blends have utility in this invention.

The non-black, mineral-filled EPDM roofing compositions prepared according to the present invention also included about 50 phr of a chemically modified clay. In a preferred embodiment, the non-black, mineral-filled EPDM roofing composition, suitable for use as rooftop walkway pads, are prepared according to the present invention also included about 50 phr of a hard clay from R.T. Vanderbilt or Evans Clay. As noted hereinabove, this clay is a chemically modified clay wherein the surface of the individual particles thereof are modified with a polyfunctional mercaptosilane coupling agent to impart crosslinking ability of the clay particle to the rubber matrix.

This chemically modified clay filler was blended with a precipitated hydrated amorphous reinforcing silica, namely HiSil™ 243 LD. This filler system is believed to be unique to the extent that it is the first known instance of a filler system for a roofing accessory material (i.e., pipe boot flashing, walkway pad, perimeter strips, batten cover, flashing, and the like) including a blend of a reinforcing silica (HiSil™ 243 LD) and a chemically modified clay (NuCap™ 190) as well as 50 parts of Mistron™ vapor talc (MVT) ultra-fine white platy powder (Luzenac America).

Other ingredients also may be included in the uncured and cured white EPDM roof accessory compositions. For example, additional conventional rubber compounding additives such as antioxidants, antiozonants, titanium dioxide, magnesium oxide, release agents, and the like may be included in conventional amounts typically ranging from about 0.25 to 5 phr. Titanium dioxide typically is added to provide brightness to the roofing accessory compositions, while magnesium oxide often is used as an acid scavenger.

A total of 21 compounds are summarized below in Tables I (compositions) and II (physical testing data) to help exemplify compositions according to the present invention. (Unless otherwise noted, all parts in Table I are phr.) Compounds 1-5 provide examples of cured, mineral-filled, non-black EPDM compositions suitable for use as perimeter strips; Compounds 6-9 provide examples of EPDM compositions suitable for use as pipe boot flashing; Compounds 10-11 provide examples of EPDM compositions suitable for use as walkway pads; Compounds 12-15 provide examples of EPDM compositions suitable for use as batten covers and flashing (formflash); Compounds 16-19 provide examples of uncured, mineral-filled, non-black EPDM compositions suitable for use as batten covers and flashing; and Compounds 20 and 21 are uncured EPDM roofing compositions suitable for use as corner flashing.

In Table I below,
EPDM-1 is an ethylene-propylene-diene terpolymer having a Mooney viscosity (ML1+4 at 125°C) of about 60, an ethylene content of about 63 weight percent, and about 4.5 weight percent unsaturation;
EPDM-2 is an ethylene-propylene-diene terpolymer having a Mooney viscosity (ML1+4 at 125°C) of about 58, an ethylene content of about 69.5 weight percent, and about 4.25 weight percent unsaturation;
EPDM-3 is an ethylene-propylene-diene terpolymer having a Mooney viscosity (ML1+4 at 125°C) of about 47, an ethylene content of about 68 weight percent, and about 2.8 weight percent unsaturation;
EPDM-4 is an ethylene-propylene-diene terpolymer having a Mooney viscosity (ML1+4 at 125°C) of about 31, an ethylene content of about 57 weight percent, and about 4.5 weight percent unsaturation;
EPDM-5 is an ethylene-propylene-diene terpolymer having a Mooney viscosity (ML1+4 at 125°C) of about 52, an ethylene content of about 69 weight percent, and about 3.2 weight percent unsaturation.
EPDM-6 is an ethylene-propylene-diene terpolymer having a Mooney viscosity (ML1+4 at 125°C) of about 58, an ethylene content of about 68 weight percent, and about 4.25 weight percent unsaturation;
the amorphous silica was a while, odorless, precipitated, hydrated silica powder having a specific gravity of about 2.0 mg/m³;
MVT is an ultra-fine, white, platy powder with a median particle size of 1.7 µm, a surface area of 18 m²/g, and a specific gravity of about 2.75 mg/m³;
the modified clay is a mercapto-functional hydrated aluminum silicate having a specific gravity of about 2.60 mg/m³;
the hard clay is Par™ RG clay, a cream-colored, untreated clay having a specific gravity of about 2.6 mg/m³;
Oil-1 is an odorless, clear, low-sulfur, non-staining paraffinic process oil with a very small amount of aromaticity and a specific gravity of about 0.868 mg/m³;
Oil-2 is an odorless, clear, low-sulfur, non-staining paraffinic process oil with a very small amount of aromaticity and a specific gravity of about 0.865 mg/m³;
AO-1 is zinc 2-mercaptotoluimidazole, an off-white or light tan non-discoloring, non-staining antioxidant having 17.2-19.3% zinc and a specific gravity of about 1.69 mg/m³;
AO-2 is octadecyl 3,5-di-tert-butyl-4-hydroxyhydrocinnamate, an off white powder with a melting point of 50° - 55°C and a specific gravity of 1.02 mg/m³;
the polyethylene glycol is Carbowax™ 3350 glycol, which comes in the form of flakes and has a specific gravity of about 1.20 mg/m³;
the polyethylene is a low molecular weight resin having point a melting point of about 106°C (ring & ball softening point method), a molecular weight of approximately 1800, and a specific gravity of about 0.906 mg/m³;
ZDBDC is zinc dibutyldithiocarbamate, a powder sulfur curing accelerator having a light cream color, a melting point of about 104° - 112°C, about 13 to 15 weight percent zinc, and a specific gravity of about 1.21 mg/m³;
DPTH is dipentamethylene thiuram hexasulfide (i.e., sulfads), a powder sulfur curing accelerator having a light yellow color, a melting point of about 115°C, an ash content of less than 0.5 weight percent, and a specific gravity of about 1.42 mg/m³;
MBTS is mercaptobeuzothiazyl disulfide, a powder sulfur curing accelerator having a cream-to-yellow color, a melting range of about 158° - 175°C, an ash content of less than 0.7 weight percent, and a specific gravity of about 1.51 mg/m³;
TMTDS is tetramethylthiuram disulfide, a white-to-cream color powder having a melting point of about 140°C, an ash content of less than 0.5 weight percent, and a specific gravity of about 1.42 mg/m³; and
TBBS is N-tert-butyl-2-benzothiazole sulfnamide, a light cream color powder having a melting point of about 108°C, an ash content of less that 0.5 weight percent, and a specific gravity of about 1.28 mg/m.

To evaluate the properties of the roof accessory compositions of the present invention, the various compounds were prepared by mixing in a type B Banbury internal mixer the EPDM terpolymers, mineral fillers, non-staining process oil, and other additives in the amounts shown in Table I. The various mixtures then were calendered. Various tests, including scorch times, cure times, compound viscosities, stress-strain properties, die C tear resistance, and, Shore A hardness, were performed are the results are reported below in Table II.

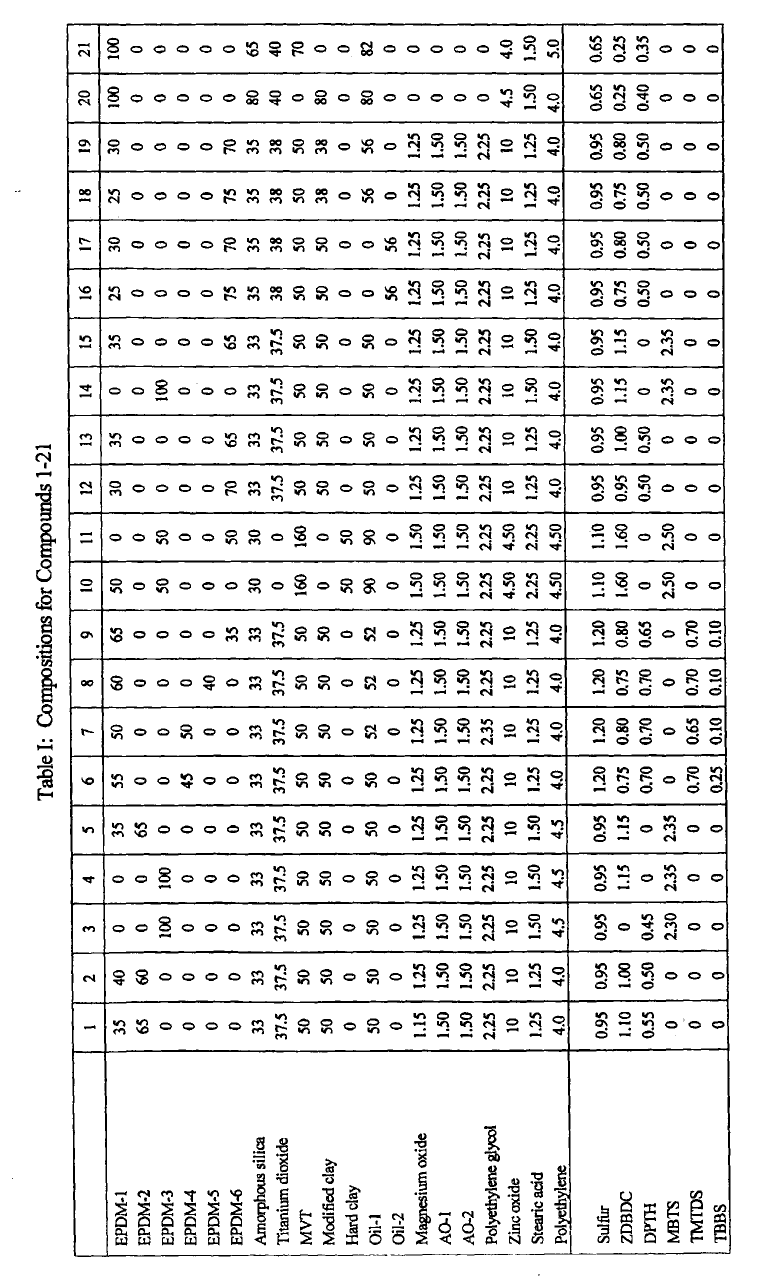

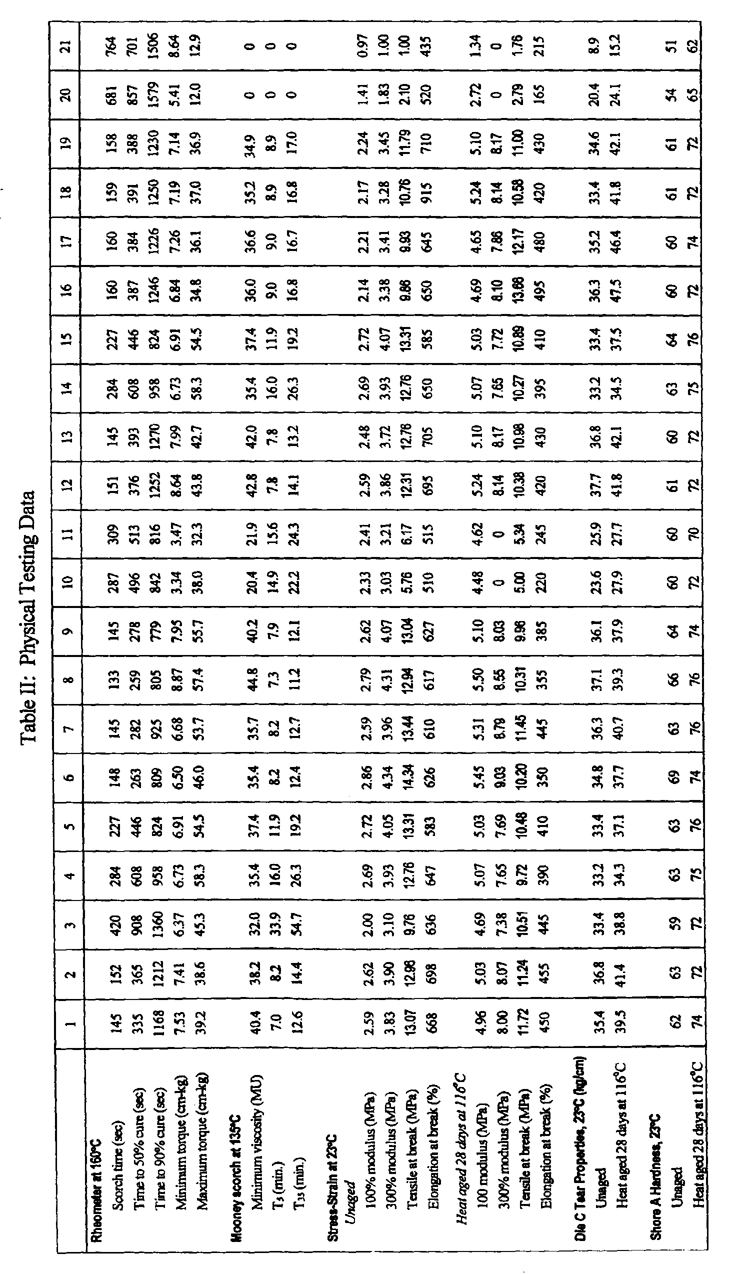

In Table II, various physical performance data is summarized. The cure characteristics of the compositions were determined by means of a Monsanto oscillating disc rheometer, which is described in detail in ASTM D 2084. The metal die used to measure scorch time, cure rates, and state of cure is referred to as a "mini die." During actual testing, the die oscillated at a 3° arc. According to the rheometer data shown in Table I, Compound Nos. 1-5 exhibit similar curing characteristics.

Test method ASTM D 1646 covers the use of the shearing disc viscometer for measuring the Mooney viscosity of raw polymers and fully compounded rubber compositions. Vulcanization is evidenced by an increase in compound viscosity. Therefore, this test method can be used to determine incipient cure time and the rate of cure during very early stages of the vulcanization process. T₅ is the amount of time until a 5-point rise in Mooney viscosity, while T₃₅ is the amount of time until a 35-point rise in Mooney viscosity.

For testing stress-strain properties at 23°C, dumbbell-shaped specimens were cut using the appropriate metal die from individual cured 1.14 mm, 15 × 15 cm flat rubber slabs (compression molded 30 minutes at 160°C) in accordance with ASTM D 412 (Method A, dumbbell and straight). Modulus, tensile strength at break and elongation at break (%) measurements were obtained on slabs cured for 30 minutes at 160°C. Both unaged and heat aged dumbbell-shaped specimens were tested using a table model Instron™ model 4301 tester, and the test results were calculated in accordance with ASTM D 412. Cured rubber slabs were heat aged 28 days at 116°C. All dumbbell-shaped specimens were allowed to sit for about 24 hours before testing was carried out at 23°C.

Die C tear properties were determined using a 90° angle metal die C to remove the test specimens from cured 1.14 mm, 15 × 15 cm flat rubber slabs (compression molded 30 minutes at 160°C) in accordance with ASTM D 624. All die C tear specimens, both unaged and heat aged were allowed to sit for about 24 hours, before testing was carried out at 23°C.

Tear properties of slabs cured for 30 minutes at 160°C were obtained using the aforementioned Instron™ tester with results being calculated as per ASTM D 624.

The data of Table II indicate that
Compounds 1-5 are suitable for use in making perimeter strips, although the best overall balance of cure characteristics, compound viscosity, stress-strain properties, die C tear resistance, and Shore A hardnesses were obtained from rubber blends including 60 Mooney and 58 Mooney EPDM terpolymers;
blends of 31 Mooney and 60 Mooney EPDMs or 60 Mooney and 58 Mooney EPDMs with amounts of mineral filler and process oil similar to those shown above with respect to Compounds 6-9 can be used to make acceptable white EPDM pipe boot flashing which, even after heat aging (28 days at 116°C), is still very springy (increases hardness was minimal after heat aging 28 days at 116°C) and results in higher die C tear properties compared to unaged EPDM pipe boot compounds;
Compounds 10 and 11 exhibit similar cure characteristics, unaged and heat aged stress-strain properties, unaged and heat aged die C tear properties, and Shore A hardnesses and are especially suitable for use in making walkway pads, which we (a) positioned in high traffic areas on a building roof, (b) lay flat and remain flexible during rooftop exposure, (c) typically are 76 cm square, although dimensions and thicknesses can vary, and (d) when unaged, preferably have a Shore A hardness of about 60 to 65 and excellent ozone aging resistance and weathering performance;
Compounds 12-15 exhibited similar cure characteristics, relatively similar unaged and heat aged stress-strain properties. similar unaged and heat aged die C tear properties, and essentially the same Shore A hardnesses and are suitable for use in making batten covers and flashing (formflash), which preferably have (1) excellent retention of tear properties and ultimate elongations after heat aging 28 days at 116°C, (2) tensile properties in excess of about 10.3 Mpa, and (3) minimal increases in Shore A hardnesses;
Compounds 16-19 exhibit similar curing characteristics, stress-strain properties, die C tear properties, and cured Shore A hardness values both before and alter heat aging and are suitable for use in making batten covers and flashing (formflash); and
Compounds 20 and 21 exhibit similar curing characteristics, stress-strain properties, die C tear properties, and cured Shore A hardness values both before and after heat aging and, therefore, are suitable for use in making corner flashing, which (a) is sheeted to a thickness ranging from 0.13 to 5.1mm, preferably from about 1.5 to 1.8 mm, and more preferably to about 1.65 mm by conventional sheeting methods (e.g., milling, calendering, or extrusion), (b) typically is laminated to a compatible seam tape or other adhesive system, (c) is flexible and extensible, (d) can be shaped or easily formed by hand and, once formed, does not retract to its original form or shape, (e) exhibits excellent weathering and water absorption resistance as well as heat aging performance, (f) has relatively long storage stability (e.g., approximately 18 months to 2 years, even when exposed to warehouse temperatures as high as 57°C), (g) preferably has a Mooney viscosity of less than about 35 Mooney units (ML/1+4 at 135°C), more preferably about 15 to 30 Mooney units, and (h) exhibits a green strength at break of less than about 0.45 MPa and preferably about 0.17 to 0.38 MPa.

Table III provides oven aging data that illustrate stress-strain properties of uncured or partially cured compositions of the present invention, suitable for use as batten covers and flashing (formflash) compounds (be., Compounds 12-13). All measurements were performed at 23°C and with a crosshead speed of about 0.85 cm/sec.

**TABLE III**

| Oven Aging Study, Flashing Compounds | | | | | |
|---|---|---|---|---|---|
| | | 100% Modulus (MPa) | 300% Modulus (MPa) | Tensile at Break (MPa) | Elongation at Break (MPa) |
| *Unaged* | | | | | |
| 12 | | 0.7 | 0.8 | 1.2 | 1853 |
| 13 | | 0.7 | 0.7 | 1.0 | 1580 |

| *Aged 2 days* | | | | | |
|---|---|---|---|---|---|
| *at 50°C* | 12 | 0.8 | 1.0 | 1.3 | 967 |
| | 13 | 0.8 | 0.9 | 1.1 | 1006 |
| *at 70°C* | 12 | 1.6 | 2.4 | 5.3 | 775 |
| | 13 | 1.5 | 2.2 | 5.0 | 721 |

| *Aged 14 days* | | | | | |
|---|---|---|---|---|---|
| *at 50°C* | 12 | 1.1 | 1.7 | 2.4 | 847 |
| | 13 | 1.2 | 1.9 | 2.7 | 883 |
| *at 70°C* | 12 | 2.4 | 3.7 | 11.0 | 680 |
| | 13 | 2.2 | 3.4 | 10.2 | 683 |

| *Aged 21 days* | | | | | |
|---|---|---|---|---|---|
| *at 50°C* | 12 | 1.2 | 2.1 | 3.0 | 658 |
| | 13 | 1.4 | 2.3 | 3.3 | 689 |
| at 70°C | 12 | 2.3 | 3.4 | 10.7 | 665 |
| | 13 | 2.4 | 3.1 | 9.4 | 640 |

| *Aged 28 days* | | | | | |
|---|---|---|---|---|---|
| *at 50°C* | 12 | 2.2 | 2.4 | 3.8 | 595 |
| | 13 | 1.6 | 2.5 | 3.5 | 560 |
| *at 70°C* | 12 | 2.4 | 3.8 | 10.4 | 625 |
| | 13 | 2.3 | 3.7 | 10.5 | 635 |

Heat aged test specimens were taken from flat rubber slabs which were aged in a forced air oven for 2, 14, 21 and 28 days at 50°C or 70°C , respectively, in accordance with ASTM D 573. For testing purposes, dumbbell-shaped test specimens were prepared using the appropriate metal die from aged 15 cm square flat rubber slabs (preformed 4 minutes at 100°C in a 15 cm square compression mold prior to oven aging) in accordance with ASTM D 412 (method A-dumbbell and straight). Modulus, tensile strength and elongation at break measurements were obtained on both unaged (compression molded for about 4 minutes at 100°C, but not oven aged) and oven aged (for varying periods of time at 50°C or 70°C as shown in Table III) dumbbell-shaped test specimens using the previously-described Instron™ tester, and the test results were calculated in accordance with ASTM D 412. Heat aging was conducted to determine if sulfur crosslinks could be formed at 50°C, a temperature often encountered when a roofing material is exposed to sunlight in most climates. All dumbbell-shaped specimens were allowed to set for about 24 hours, before testing was carried out at 23°C.

The cure package in Compounds 12-13 includes sulfur and at least one of the foregoing accelerators. As noted previously, flashing (formflash) material is not cured prior to application and need not be cured purposefully subsequent thereto. The presence of the cure package allows the sheet material to cure at temperatures of at least about 50°C, readily obtainable when exposed to sunlight in most climates.

Relative to the unaged test specimens, the test specimens aged 2, 14, 21 and 28 days at 50°C showed a gradual increase in both modulus and tensile strength. Thus, both white EPDM compounds should be essentially fully cured after at least 15 weeks of rooftop aging at 50°C.

After 14 days of aging at 70°C, both of the mineral filled white EPDM compounds were fully cured. (Rooftop curable compounds are considered to be fully cured when the tensile strength exceeds about 10.3 MPa.) Also, no additional increase in tensile strength was observed after aging Compound Nos. 12 and 13 for 21 and 28 days at 70°C.

## Claims

1. A non-black, mineral-filled roof accessory material prepared from a composition comprising at least one ethylene-propylene-diene terpolymer and, per 100 parts by weight of said terpolymer,
from about 25 to about 275 parts by weight of at least one mineral filler;
from about 20 to about 130 parts by weight of a non-staining processing oil; and
from about 1.5 to about 10 parts by weight of a sulfur cure package having at least one organic vulcanizing accelerator, said cure package allowing said non-black, mineral-filled roof accessory material to cure at 160°C at about the same rate as a compatible black roofing material,
said roof accessory material being a perimeter strip, pipe boot flashing, walkway pad, batten cover, corner flashing, or formflash with the provisos that
1) when said roof accessory material is a perimeter strip, pipe boot flashing, or walkway pad, said terpolymer comprises at least 4 weight percent unsaturation and said roof accessory material is cured prior to application on a rooftop, and
2) when said roof accessory material is a batten cover, corner flashing, or formflash, said roof accessory material is curable after application on a rooftop.

2. The roof accessory material of claim 1 wherein said at least one terpolymer has an ethylene content of greater than 57 weight percent.

3. The roof accessory material of any of claims 1 to 2 wherein said at least one mineral filler comprises talc, reinforcing silica, or chemically modified clay.

4. The roof accessory material of claim 3 wherein said at least one mineral filler comprises chemically modified clay and wherein said clay is a mercapto-functional hydrated aluminum silicate.

5. The roof accessory material of claim 3 wherein said at least one mineral filler comprises reinforcing silica and wherein said silica is amorphous.

6. The roof accessory material of any of claims 1 to 5 wherein said processing oil comprises at least one of paraffinic oils and naphthenic oils.

7. The roof accessory material of any of claims 1 to 6 wherein said accelerator comprises both a dithiocarbamate and a thiazole.

8. A method for covering a structure comprising applying to said structure the roof accessory material of any of claims 1 to 7 and, where said roof accessory material is a batten cover, corner flashing, or formflash, curing said material.
